# EUROPÄISCHE PATENTSCHRIFT

(11) **EP 0 513 488 B1**
(45) Veröffentlichungstag und Bekanntmachung des Hinweises auf die Patenterteilung: **17.07.1996**
(21) Anmeldenummer: 92104129.9
(22) Anmeldetag: 11.03.1992
(51) Int. Cl.: C08F 283/00, C08G 65/48, C08L 77/00, C08L 51/08

(54) **Formmassen auf Basis modifizierter Polyarylether**
Thermoplastic moulding compositions based on modified polyarylether
Masses à mouler thermoplastiques à base de poly(éther d'aryle) modifiées

(30) Priorität: 30.03.1991 DE 4110460
(43) Veröffentlichungstag der Anmeldung: 19.11.1992
(73) Patentinhaber: BASF Aktiengesellschaft, D-67063 Ludwigshafen (DE)
(72) Erfinder: Weber, Martin, Dr., W-6730 Neustadt (DE); Muehlbach, Klaus, Dr., W-6718 Gruenstadt (DE); Koch, Eckhard Michael, Dr., W-6701 Fussgoenheim (DE)

(56) Entgegenhaltungen:
- EP-A- 0 144 966
- EP-A- 0 247 516
- EP-A- 0 387 824
- DE-A- 3 905 340
- WORLD PATENTS INDEX LATEST Derwent Publications Ltd., London, GB; AN 88-358583

## Beschreibung

Die vorliegende Erfindung betrifft Formmassen auf der Grundlage eines Polyarylethers A, erhältlich durch Umsetzung von Polyarylethern I mit wiederholten Strukturelementen 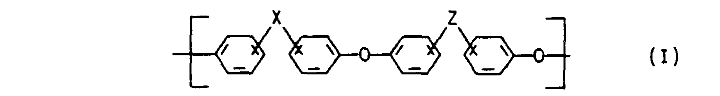 und Halogen- oder Methoxyendgruppen
oder deren kernsubstituierten C₁-C₆-Alkyl-, Alkoxy-, Aryl-, Chlor- oder Fluorderivaten, wobei
X und Z unabhängig voneinander
-SO₂-, -O- -S- , 〉C=0 ,
eine chemische Bindung oder -CRR'- bedeuten, R und R' jeweils Wasserstoffatome, C₁-C₆-Alkyl- oder Alkoxy-Gruppen, R' zusätzlich Arylgruppen oder deren Fluor- oder Chlorderivate darstellen, mit der Maßgabe, daß X und Z nicht gleichzeitig -O- bedeuten, mit einer reaktiven Verbindung, die neben einer C,C-Doppel-oder Dreifachbindung eine bzw. mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen enthält.

In einer weiteren Ausführungsform betrifft die vorliegende Erfindung Formmassen, die, bezogen auf die Summe der Komponenten A bis C,
A) 5 bis 95 Gew.-% Polyarylether A,
B) 0 bis 90 Gew.-% Polyarylether I und
C) 5 bis 45 Gew.-% faser- oder teilchenförmige Verstärkungs- oder Füllstoffe oder deren Mischungen
enthalten. Ferner betrifft die vorliegende Erfindung Formmassen, die, bezogen auf die Summe der Komponenten A bis E,
A) 1 bis 99 Gew.-% Polyarylether A,
B) 0 bis 90 Gew.-% Polyarylether I,
C) 0 bis 45 Gew.-% faser- oder teilchenförmige Verstärkungs- oder Füllstoffe oder deren Mischungen,
D) 1 bis 99 Gew.-% thermoplastische Polyamide D und
E) 0 bis 25 Gew.-% schlagzähmodifizierende Kautschuke E
enthalten.

Polyarylether zeichnen sich durch eine Reihe von interessanten Eigenschaften aus, wie gute Wärmeformbeständigkeit, gute mechanische Festigkeit und geringe Wasseraufnahme.

Für viele Anwendungszwecke sind diese Materialien jedoch nur bedingt einzusetzen.

Eine Anwendung als thermostabiler Kleber würde z.B. voraussetzen, daß die Polyarylether besser auf polaren Oberflächen haften.

Auch genügt die Steifigkeit der Polyarylether häufig nicht den Anforderungen im Fahrzeug- und Apparatebau. Diese läßt sich im allgemeinen nur dann durch Einarbeiten von Verstärkungs- und Füllstoffen zufriedenstellend erhöhen, wenn der Thermoplast gut an diesen Zusätzen haftet. Dazu werden in der Regel die Oberflächen der Verstärkungs- und Füllstoffe mit, auf den jeweiligen Thermoplasten abgestimmten, Verbindungen, z.B. Aminosilan- oder Polyurethanverbindungen behandelt. Die Polyarylether sind jedoch mit diesen sogenannten Schlichten nur bedingt verträglich.

Von Interesse ist außerdem, polare Thermoplaste wie Polyamid mit Polyarylethern zu mischen, um Blends, die im Vergleich zum reinen Polyamid eine höhere Wärmeformbeständigkeit besitzen, herzustellen. Daneben könnte der Zusatz von Polyamid zu Polyarylethern deren Fließfähigkeit und Lösungsmittelbeständigkeit verbessern.

Mischungen (Blends) aus Polyarylethern (z.B. Polyethersulfonen) und Polyamiden sind bekannt und werden beispielsweise in DE-OS 21 22 735 beschrieben: Aufgrund der thermodynamisch bedingten Unverträglichkeit von Polyarylethern und Polyamiden haben derartige Mischungen aber unbefriedigende mechanische Eigenschaften, insbesondere eine zu niedrige Zähigkeit, ausgedrückt durch die geringe, gemessene Durchstoßarbeit.

Ein grundlegendes Prinzip zur Herstellung der Verträglichkeit nichtmischbarer Polymerer besteht darin, Block- oder Pfropfcopolymere, deren Segmente jeweils mit einer Komponente des Blends verträglich sind, in geringen Mengen (1 bis 10 Gew.-%) als Phasenvermittler in die entsprechenden Blends einzuarbeiten (D.R. Paul in "Polymer Blends", Vol. 2, Academic Press Inc., New York, 1978, D.R. Paul, S. Newman Edts.)

Dieses Prinzip wurde auch bei Polyarylether/Polyamid-Blends schon angewendet. In der US-PS-3,655,822 werden u.a. Blends aus PSU-block-Nylon 6 und Polysulfon oder Nylon 6 beschrieben; die Blends weisen gegenüber Polysulfon verbesserte Spannungsrißbeständigkeit auf.

Im Vergleich zum Nylon 6 zeichnen sich diese Blends auch durch eine deutlich verbesserte Wärmeformbeständigkeit aus. Wegen des komplizierten Herstellverfahrens für solche Blockcopolymere haben diese Blends jedoch keine technische Bedeutung erlangt.

In der EP-A-374 988 werden ähnliche Blends wie die vorgenannten Blends aus Polysulfon, Polyamid 4, 6 und Polysulfon-block-Nylon 6 beschrieben. Durch Einarbeitung geringer Mengen an Blockcopolymer (ca. 5 Gew.-%) wird bereits eine Verbesserung der Kerbschlagzähigkeit erreicht. Auch diese Blends haben sich nicht durchsetzen können.

Funktionalisierte Polyarylether sind bekannt, sie finden bisher vor allem im Bereich der Membrantechnologie Anwendung. Aufgrund der hohen Glasübergangstemperatur, der hervorragenden mechanischen Eigenschaften und der guten chemischen Beständigkeit können diese Materialien, unter den z. T. extremen Bedingungen (Temperatur, Druck) der Stofftrennprozesse, einer Vielzahl chemischer Stoffe ausgesetzt werden.

Die Modifizierung von Polyarylethern wurde deshalb vor allem unter dem Gesichtspunkt der Verbesserung von Selektivität und Permeabilität gegenüber bestimmten Substraten betrieben.

Dabei werden vor allem Umsetzungs- bzw. Substitutionsmöglichkeiten der aromatischen Gruppen des Kettenrückgrats, wie elektrophile Substitution und Metallierung verwendet.

Die Metallierung von Polysulfonen mit Butyllithium liefert ionische Zentren am Kettenrückgrat, die als Initiatorstellen für eine "grafting from"-Reaktion dienen können, in der z. B. durch anionische Polymerisation von Hexamethyltrisiloxan das Polysulfon-g-Polydimethylsiloxan entsteht (Y. Nagase, A. Naruse und K. Matsui, POLYMER 30, 1931 (1989)).

Die Funktionalisierung mit polaren Gruppen, ausgehend von metalliertem Polysulfon eignet sich aber, da die Metallierung unter Inertgas und wasserfreien Bedingungen erfolgen muß, praktisch nur für Versuche im Labormaßstab.

Die elektrophile Substitution von Polyarylethern wurde bereits beschrieben am Beispiel der Sulfonierung (B.C. Johnson et. al. J. Polym. Sci. A 22, 723-737 (1984)), der Bromierung (M.D. Guiver et. al. Preprints, Speciality Polymers 88) und der Halomethylierung (A. Warshawsky et. al. J. Polym. Sci., A 28, 2885 - 2905 (1990)).

Diese Reaktionen laufen jedoch nur unter drastischen Bedingungen ab und sind z. T. mit Abbau- und Vernetzungsreaktionen verbunden; das Abtrennen von Katalysatoren erfordert einen beträchtlichen Aufwand.

In der JP-A-63 270 739 werden Copolymere offenbart, die durch Umsetzung von Polyarylsulfonethern, die Hydroxy- oder Phenolatendgruppen enthalten, mit Vinylpolymeren, welche mindestens eine Art funktioneller Gruppen (z.B. Säureanhydrd tragen, erhalten werden. Das Eigenschaftsprofil dieser Copolymere ist jedoch unbefriedigend.

Der Erfindung liegt daher die Aufgabe zugrunde, modifizierte Polyarylether mit verbesserter Klebefestigkeit und/oder verbesserter Verträglichkeit zu anderen Thermoplasten bzw. Füllstoffen zur Verfügung zu stellen.

Die Aufgabe der Erfindung wird gelöst durch die eingangs definierten Formmassen auf der Grundlage von Polyarylethern A.

### Polyarylether A

Die Polyarylether A sind erhältlich durch Umsetzung eines Polyarylethers I mit dem allgemeinen Strukturelement I 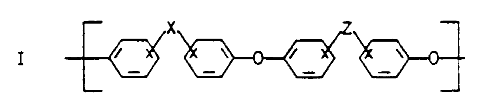 und Halogen- oder Methoxyendgruppen
oder deren kernsubstituierten C₁-C₆-Alkyl- oder Alkoxy, Aryl-, Chlor- und Fluorderivaten, wobei
X und Z unabhängig voneinander
-SO₂-, -O-, -S-, 〉C=0,
eine chemische Bindung oder -CRR'- bedeuten, wobei R und R' jeweils Wasserstoffatome, C₁-C₆-Alkyl- oder Alkoxy-Gruppen, R' zusätzlich Arylgruppen oder deren Fluor- oder Chlorderivate darstellen, mit einer reaktiven Verbindung, die neben einer C,C-Doppel- oder Dreifachbindung eine bzw. mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe enthalten, erhalten. Ebenso können als Polyarylether I Copolymere, wie Block- oder Pfropfcopolymere, die Polyarylethersegmente enthalten, verwendet werden.

Es kann zweckmäßig sein, die Reaktion in Abwesenheit von Radikalstartern vorzunehmen. Im allgemeinen wird die Umsetzung jedoch in Gegenwart von Radikalstartern durchgeführt.

Die Herstellung der Polyarylether ist allgemein bekannt (vgl. z.B. GB 1 152 035; US 4 870 153), ebenso die Synthese von Copolyarylethern mit Blockstruktur (DE 3 742 264).

Die Polyarylether enthalten Halogen- oder Methoxyendgruppen.

Das Molekulargewicht geeigneter Polyarylether (I) liegt im allgemeinen im Bereich von 1500 - 60000 g/mol.

Liegen die Polyarylethersegmente in Copolymeren - soweit herstellbar - mit Struktureinheiten von Polyamiden, Polyestern, aromatischen Polycarbonaten oder Polyestercarbonaten, Polysiloxanen, Polyimiden oder Polyetherimiden vor, sind die Molekulargewichte der Blöcke- bzw. der Pfropfarme in den Copolymeren im Bereich von 1000 - 30000 g/mol, die Blöcke unterschiedlicher Struktur können in den Copolymeren alternierend oder statistisch angeordnet sein. Der Gewichtsanteil der Polyarylether in den Copolymeren soll 3 - 97, vorzugsweise 10 - 90 und insbesondere 20 - 80 Gew.-% betragen. Methoden zur Synthese solcher Copolymerer sind beispielsweise bei A. Noshay et. al., Block Copolymers, Academic Press, 1977, beschrieben.

Geeignete Verfahrensbedingungen zur Synthese von Polyarylethern sind beispielsweise in den EP-A-113 112 und EP-A-135 130 beschrieben.

Besonders geeignet ist die Umsetzung der Monomeren in aprotischen polaren Lösungsmitteln in Gegenwart von wasserfreiem Alkalicarbonat. Eine besonders bevorzugte Kombination ist N-Methylpyrrolidon als Lösungsmittel und Kaliumcarbonat als Katalysator oder die Umsetzung in der Schmelze.

Zur Modifizierung der Polyarylether bzw. Polyarylethersegmente enthaltenden Copolymeren werden erfindungsgemäß reaktive Verbindungen, die neben einer C,C-Doppel- oder Dreifachbindung eine bzw. mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppe enthalten, eingesetzt.

Typisch geeignete Verbindungen sind beispielsweise Maleinsäure, Methylmaleinsäure, Itaconsäure, Tetrahydrophthalsäure, deren Anhydride und Imide, Fumarsäure, die Mono- und Diester dieser Säuren, z. B. von C₁-C₁₈-Alkanolen, die Mono- oder Diamide dieser Säuren wie N-Phenylmaleinimid, Maleinsäurehydrazid.

Bevorzugt werden α, β-ungesättigte Dicarbonsäuren bzw. deren Anhydride, Di-Ester und Mono-Ester der nachstehenden allgemeinen Struktur IV und V verwendet. 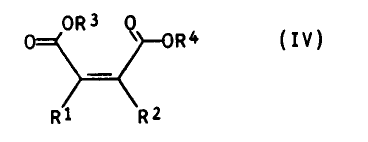 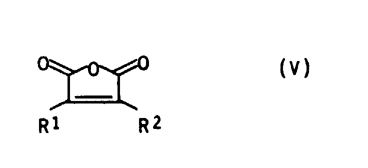 wobei
R¹, R², R³ und R⁴ unabhängig voneinander Wasserstoff sowie C₁-C₁₈-Alkyl-Gruppen sein können.

Besonders geeignete Verbindungen sind Maleinsäureanhydrid, Fumarsäure und Itaconsäure.

Nach dem der Erfindung zugrundeliegenden Verfahren werden die Polymeren und die reaktive Verbindung z. B. in einem aromatischen Lösungsmittel umgesetzt. Als besonders geeignete Lösungsmittel haben sich Chlorbenzol, o-Dichlorbenzol und N-Methylpyrrolidon erwiesen. Dabei wird im allgemeinen ein üblicher Radikalinitiator eingesetzt. Die Umsetzung wird im allgemeinen bei 75 - 150°C ausgeführt. Das Reaktionsprodukt wird durch Fällung mit einem üblichen Fällungsmittel, wie niedermolekularer Alkohol und Keton, oder durch Entfernen des Lösungsmittels (z. B. im Entgasungsextruder, Dünnschichtverdampfer), gewonnen.

In einer weiteren Ausführungsform werden die Reaktionsteilnehmer bei einer Temperatur von 270 - 350°C in der Schmelze in einem kontinuierlich oder absatzweise arbeitenden Mischaggregat (z.B. Ein- oder Zweiwellenextruder, Kneter) umgesetzt.

Die reaktive Verbindung wird dabei vorzugsweise in flüssiger Form, insbesondere innerhalb der Knetzone eines Mischaggregats zur Schmelze des Polymeren zudosiert.

Bevorzugt werden in den erfindungsgemäßen Formmassen als Polyarylether A modifizierte Polyarylether I eingesetzt, die durch Umsetzen von 80 bis 99,9 Gew.-%, insbesondere 90 bis 99 Gew.-% des unmodifizierten Polyarylethers I, mit 0,1 bis 20 Gew.-%, insbesondere 1 bis 10 Gew.-% der reaktiven Verbindung erhalten worden war.

Besonders bevorzugt werden Formmassen auf der Grundlage von mit 0,1 bis 1,5 Gew.-% Maleinsäureanhydrid gepfropften Polyarylethersulfonen. Dabei werden Polyarylethersulfone, enthaltend 5 bis 95 Mol-% Einheiten II 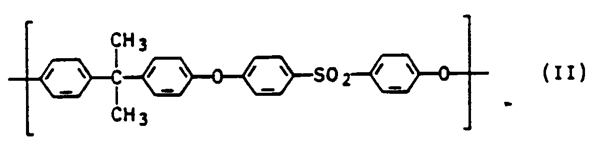 und 5 bis 95 Mol-% Einheiten III 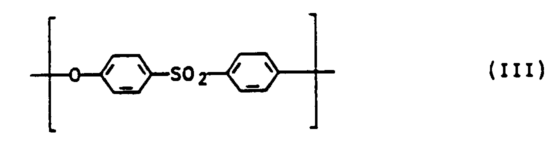 bevorzugt.
Polyarylethersulfone mit 80 bis 95, vorzugsweise 85 bis 95 mol-% Einheiten der Formel II und III und entsprechend 5 bis 20, vorzugsweise 5 bis 15 mol-% Einheiten der Formel III bzw. II seien hier insbesondere erwähnt.

Als Radikalstarter können in der Regel die in der Fachliteratur (z.B. J.K. Kochi, "Free Radicals", J. Wiley, New York, 1973) beschriebenen Verbindungen Verwendung finden.

Als besonders günstige Radikalstarter seien genannt:

Di-(2,4-dichlorbenzoyl)peroxid, tert.-Butylperoxid, Di-(3,5,5-trimethylhexanol)peroxid, Dilauroylperoxid, Didecanoylperoxid, Dipropionylperoxid, Dibenzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvaleriansäure-butylester, 2,2-Di-tert.-butylperoxybutan, Dicumylperoxid, tert.-Butylcumylperoxid, 1,3-Di(tert.-butylperoxyisopropyl)benzol und Di-tert.-butylperoxid.

Genannt seien ebenfalls organische Hydroperoxide wie Di-isopropylbenzolmonohydroperoxid, Cumolhydroperoxid, tert.-Butylhydroperoxid, p-Menthylhydroperoxid und Pinanhydroperoxid sowie hochverzweigte Alkane. Beispiele für die letzteren sind 2,3-Dimethyl-2,3-diphenylbutan, 3,4-Dimethyl-3,4-diphenylhexan und 2,2,3,3-Tetraphenylbutan; sie eignen sich wegen ihrer Zerfallseigenschaften besonders für die Modifizierung in der Schmelze.

Üblicherweise werden die Radikalstarter in Mengen von etwa 0,01 bis etwa 1 Gew.-%, bezogen auf die eingesetzten Polyarylether 1 verwendet. Selbstverständlich können auch Mischungen unterschiedlicher Radikalstarter eingesetzt werden.

Die reaktiven Gruppen in den modifizierten Polyarylethern A können auch als Ausgangspunkt für weitere Pfropf- bzw. Modifizierungsreaktionen dienen.

Der Anteil an funktionellen Gruppen im modifizierten Polyarylether A kann durch die bekannten Methoden der allgemeinen organischen Analytik, wie z.B. Titration, IR-, UV- und NMR-Spektroskopie bestimmt werden.

Die erfindungsgemäßen Formmassen können neben den modifizierten Polyarylethern A noch weitere Komponenten enthalten, die im folgenden näher beschrieben werden.

In einer der bevorzugten Ausführungsform enthalten die Formmassen die Komponenten
A) 5 bis 95 Gew.-%, insbesondere 5 bis 50 Gew.-% Polyarylether A,
B) 0 bis 90 Gew.-%, insbesondere 15 bis 80 Gew.-% Polyarylether I und
C) 5 bis 45 Gew.-%, insbesondere 10 bis 35 Gew.-% faser- oder teilchenförmige Verstärkungs- oder Füllstoffe oder deren Mischungen, wobei sich die Summe der Komponenten A bis C jeweils zu 100 Gew.-% addiert.

In einer anderen bevorzugten Ausführungsform enthalten die Formmassen die Komponenten
A) 1 bis 99 Gew.-%, insbesondere 10 bis 90 Gew.-% Polyarylether A,
B) 0 bis 90 Gew.-%, insbesondere 5 bis 80 Gew.-% Polyarylether I,
C) 0 bis 45 Gew.-%, insbesondere 10 bis 35 Gew.-% faser- oder teilchenförmige Verstärkungs- oder Füllstoffe oder deren Mischungen,
D) 1 bis 99 Gew.-%, insbesondere 10 bis 90 Gew.-% thermoplastische Polyamide D und
E) 0 bis 25 Gew.-%, insbesondere 2 bis 20 Gew.-% schlagzäh modifizierende Kautschuke E.

Weitere erfindungsgemäße Formmassen, die bevorzugt werden, enthalten die Komponenten
A) 10 bis 90 Gew.-% Polyarylether A,
B) 0 bis 80 Gew.-% Polyarylether I,
D) 10 bis 90 Gew.-% thermoplastische Polyamide D und
E) 2 bis 20 Gew.-% schlagzähmodifizierende Kautschuke E.

### Komponente B

Neben den modifizierten Polyarylethern A können die erfindungsgemäßen Formmassen auch nicht modifizierte Polyarylether enthalten. Als Komponente B können die zur Herstellung der Polyarylether A beschriebenen unmodifizierten Polyarylether I oder Polyarylethersegmente enthaltende Copolymere eingesetzt werden. Die allgemeine Struktur der Polyarylethersegmente wird durch Einheiten der Formel I wiedergegeben, wobei auch Mischungen mit entsprechenden kernsubstituierten C₁-C₆-Alkyl- oder Alkoxy-, Aryl-, Chlor- oder Fluorderivate in Betracht kommen. 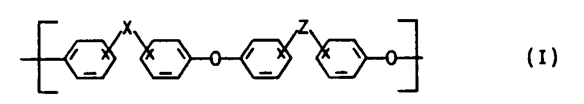 X und Z bedeuten unabhängig voneinander -SO₂-, -O-, -S-, -CO-, eine chemische Bindung oder -CRR'-, wobei R und R' im allgemeinen jeweils Wasserstoffatome sind, aber auch C₁-C₆-Alkyl- oder Alkoxy-Gruppen, Arylgruppen oder deren Fluor- oder Chlorderivate bedeuten können.

Diese Polyarylether I sind, wie vorstehend angegeben, bekannt.

Die Polyarylether I können in den erfindungsgemäßen Formmassen mit einem Anteil von bis zu 90, vorzugsweise bis zu 80 Gew.-% vorhanden sein.

### Komponente C

Neben den Komponenten A und B können die erfindungsgemäßen Formmassen noch Verstärkungs- oder Füllstoffe enthalten. Als Komponente C können die erfindungsgemäßen Formmassen z.B. bis 45, vorzugsweise 10 bis 35 Gew.% faser- oder teilchenförmige Füllstoffe oder Verstärkungsstoffe oder deren Mischungen enthalten.

Bevorzugte faserförmige Füll- oder Verstärkungsstoffe sind Kohlenstoffasern, Kaliumtitanatwhisker, Aramidfasern und besonders bevorzugt Glasfasern. Bei der Verwendung von Glasfasern können diese zur besseren Verträglichkeit mit dem Matrixmaterial mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Im fertigen Spritzgußteil liegt die mittlere Länge der Glasfasern vorzugsweise im Bereich von 0,08 bis 0,5 mm.

Kohlenstoff- oder Glasfasern können auch in Form von Glasgeweben, Glasmatten oder Glasseidenrovings eingesetzt werden.

Als teilchenförmige Füllstoffe eignen sich amorphe Kieselsäure, Asbest, Magnesiumcarbonat (Kreide), gepulverter Quarz, Glimmer, Talkum, Feldspat, Glaskugeln und insbesondere Calciumsilikate wie Wollastonit und Kaolin (insbesondere kalzinierter Kaolin).

Bevorzugte Kombinationen von Füllstoffen sind z.B. 20 Gew.% Glasfasern mit 15 Gew.% Wollastonit und 15 Gew.% Glasfasern mit 15 Gew.% Wollastonit.

### Komponente D

Neben den Komponenten A bis C können die erfindungsgemäßen Formmassen auch noch thermoplastische Polyamide enthalten. Die als Komponente D in den Massen enthaltenen Polyamide sind ebenfalls bekannt und umfassen teilkristalline und amorphe Harze mit einem Molekulargewicht (Gewichtsmittelwert) von mindestens 5000, die gewöhnlich als Nylon bezeichnet werden. Solche Polyamide sind z.B. in den US-Patent-schriften 2 071 250, 2 071 251, 2 130 523, 2 130 948, 2 241 322, 2 312 966, 2 512 606 und 3 393 210 beschrieben.

Die Polyamide D können z.B. durch Kondensation äquimolarer Mengen einer gesättigten oder einer aromatischen Dicarbonsäure mit 4 bis 12 Kohlenstoffatomen, mit einem gesättigten oder aromatischen Diamin, welches bis 14 Kohlenstoffatome aufweist oder durch Kondensation von ω-Aminocarbonsäuren bzw. Polyaddition von entsprechenden Lactamen hergestellt werden.

Beispiele für derartige Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide wie Polycaprolactam, Polylaurinsäurelactam, ferner Poly-11-aminoundecansäure und ein Polyamid aus Di(p-aminocyclohexyl)-methan- und Dodecandisäure.

Es ist auch möglich, Polyamide zu verwenden, die durch Copolykondensation von zwei oder mehr der obengenannten Polymeren oder ihrer Komponenten hergestellt worden sind, z.B. Copolymere aus Adipinsäure, Isophthalsäure oder Terephthalsäure und Hexamethylendiamin oder Copolymere aus Caprolactam, Terephthalsäure und Hexamethylendiamin. Derartige teilaromatische Copolyamide enthalten als Komponente α1) 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der gesamten eingesetzten aromatischen Dicarbonsäuren können durch Isophthalsäure oder andere aromatische Dicarbonsäuren, vorzugsweise solche, in denen die Carboxylgruppen in para-Stellung stehen, ersetzt werden.

Neben den Einheiten, die sich von Terephthalsäure und Hexamethylendiamin ableiten, enthalten die teilaromatischen Copolyamide Einheiten α2), die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall ist darauf zu achten, daß der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactam und von Adipinsäure und Hexamethylendiamin ableiten, unterliegt dabei keiner besonderen Beschränkung.

Als besonders vorteilhaft für viele Anwendungszwecke haben sich Polyamide mit 50 bis 80, insbesondere 60 bis 75 Gew.-% Einheiten, die sich von Terephthalsäure und Hexamethylendiamin ableiten (Einheiten α1)) und 20 bis 50, vorzugsweise 25 bis 40 Gew.-% Einheiten, die sich von ε-Caprolactam ableiten (Einheiten α₂)), erwiesen.

Die Herstellung der teilaromatischen Copolyamide kann z.B. nach dem in den EP-A-129 195 und EP 129 196 beschriebenen Verfahren erfolgen.

Bevorzugte teilaromatische Polyamide sind solche, die einen Gehalt an Einheiten des Dihexamethylentriamins von unter 0,5 Gew.-% aufweisen.

Bevorzugt werden lineare Polyamide mit einem Schmelzpunkt über 200°C.

Bevorzugte Polyamide sind Polyhexamethylenadipinsäureamid, Polyhexamethylensebacinsäureamid und Polycaprolactam sowie Polyamid 6/6T und Polyamid 66/6T. Die Polyamide weisen im allgemeinen eine relative Viskosität von 2,0 bis 5 auf, bestimmt an einer 1 gew.%igen Lösung in 96 %iger Schwefelsäure bei 23°C, was einem Molekulargewicht von etwa 15 000 bis 45 000 entspricht. Polyamide mit einer relativen Viskosität von 2,4 bis 3,5, insbesondere 2,5 bis 3,4 werden bevorzugt verwendet.

Außerdem seien noch Polyamide erwähnt, die z.B. durch Kondensation von 1,4-Diaminobutan mit Adipinsäure unter erhöhter Temperatur erhältlich sind (Polyamid-4,6). Herstellungsverfahren für Polyamide dieser Struktur sind z.B. in den EP-A 38 094, EP-A 38 582 und EP-A 39 524 beschrieben.

Der Anteil der Polyamide D an den erfindungsgemäßen Formmassen kann 1 bis 99, vorzugsweise 10 bis 90 und insbesondere 10 bis 40 Gew.-% betragen.

### Komponente E

Neben den Komponenten A bis D können die erfindungsgemäßen Formmassen auch bis 25, vorzugsweise 2 bis 20 Gew.-% eines schlagzähmodifizierenden Kautschuks E enthalten. Es können übliche Schlagzähmodifier verwendet werden, die für Polyamide und/oder Polyarylether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den o.g. funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomeren können in der Schmelze oder in Lösung, gegebenenfalls in Gegenwart eines Radikalstarters wie Cumolhydroperoxid auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich i.a. von Butadien, Isopren, Alkylacrylaten oder Alkylmethacrylaten und gegebenenfalls weiteren Comonomeren ab. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich i.a. von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tertiär-Butyl(meth-)acrylat, Acrylsäure, Glycidyl(meth-)acrylat und Vinyloxazolin. Der Anteil an Monomeren mit funktionellen Gruppen beträgt i.a. 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt i.a. 1:9 bis 9:1, bevorzugt 3:7 bis 8:2.

Derartige Kautschuke, die die Zähigkeit von Polyamiden erhöhen, sind an sich bekannt und beispielsweise in der EP-A 208 187 beschrieben.

Eine weitere Gruppe von geeigneten Schlagzähmodifiern a₃) sind thermoplastische Polyester-Elastomere. Unter Polyesterelastomeren werden dabei segmentierte Copolyetherester verstanden, die langkettige Segmente, die sich in der Regel von Poly(alkylen)etherglycolen und kurzkettige Segmente, die sich von niedermolekularen Diolen und Dicarbonsäuren ableiten, enthalten. Derartige Produkte sind an sich bekannt und in der Literatur, z.B. in der US-A 3 651 014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Neben den beschriebenen Bestandteilen A bis E können die erfindungsgemäßen Formmassen noch z.B. bis 40 Gew.-% weiterer Additive wie Flammschutzmittel und Stabilisatoren enthalten.

Die erfindungsgemäßen Formmassen können nach an sich bekannten Verfahren, beispielsweise Extrusion, hergestellt werden.

Enthalten die erfindungsgemäßen thermoplatischen Formmassen neben den Polyarylethern A weitere Bestandteile, so können die Formmassen z.B. hergestellt werden, indem man die Ausgangskomponenten in üblichen Mischvorrichtungen wie Schneckenextrudern vorzugsweise Zweischneckenextrudern, Brabender-Mühlen oder Banburry-Mühlen sowie Knetern mischt und anschließend extrudiert. Nach der Extrusion wird das Extrudat abgekühlt und zerkleinert.

Die Reihenfolge der Mischung der Komponenten kann variiert werden, so können zwei oder ggf. drei Komponenten vorgemischt werden, es können aber auch alle Komponenten gemeinsam gemischt werden.

Um eine möglichst homogene Formmasse zu erhalten, ist eine intensive Durchmischung vorteilhaft. Dazu sind im allgemeinen mittlere Mischzeiten von 0,2 bis 30 Minuten bei Temperaturen von 280 bis 380°C erforderlich. Die erfindungsgemäßen Formmassen auf der Grundlage der Polyarylether A zeichnen sich durch hohe Klebfestigkeiten aus und eignen sich daher als thermostabile Kleber. Darüberhinaus weisen die füllstoffhaltigen Formmassen sehr gute Zähigkeiten und Festigkeiten auf. Sie eignen sich daher beispielsweise zum Herstellen von Formteilen, die hohen Belastungen ausgesetzt sind.

Die erfindungsgemäßen Formmassen, die thermoplastische Polyamide enthalten, zeichnen sich durch gute multiaxiale Zähigkeit, mechanische Festigkeit und Spannungsrißbeständigkeit aus. Aufgrund ihrer hohen Wärmeformbeständigkeit und guten mechanischen Eigenschaften eignen sich diese Formmassen zum Herstellen von Formteilen, insbesondere für elektrische und elektronische Gerätebauteile. Die hohe Wärmeformbeständigkeit in Kombination mit guter Chemikalienbeständigkeit ermöglicht auch Anwendungen im chemisch-technischen Anlagenbau.

### Beispiele

In den folgenden Beispielen wird der Anteil an Maleinsäureanhydrid, angegeben in Gew.-%, durch potentiometrische Titration einer Lösung des Polyarylethers A in Dimethylformamid mit methanolischer KOH-Lösung bestimmt.

Das scheinbare Molekulargewicht der Produkte wurde durch Gelpermeationschromatographie ermittelt; außerdem kann mit dieser Methode auch festgestellt werden, ob ein Anteil an nicht umgesetztem, niedermolekularem Modifizierungsmittel im Produkt vorhanden ist.

### Erfindungsgemäße Formmassen als thermostabile Kleber (Beispiele 1 bis 3)

### Beispiel 1

10 g eines Polyarylethers aus 2,2-Di-(4-hydroxyphenyl)propan (Bisphenol A) und 4,4'-Dichlordiphenylsulfon (Polysulfon; VZ = 64 ml/g, gemessen in 1 %iger Lösung in einem 1 : 1-Gemisch von Phenol und 1,2-Dichlorbenzol z.B. Handelsprodukt Ultrason® S 2010) wurden in 100 ml Chlorbenzol gelöst und auf 130°C erhitzt. Bei dieser Temperatur wurde über einen Zeitraum von 4 Stunden insgesamt 1,13 g (0,011 Mol) Maleinsäureanhydrid (MSA), dispergiert in 4 ml Chlorbenzol sowie 0,17 g (0,44 mMol) Dicumylperoxid, gelöst in 4 ml Chlorbenzol, langsam zugetropft. Das Produkt wurde durch Fällung mit 500 ml Ethanol isoliert. Man erhielt ein weißes Pulver.

### Beispiel 2

10 g (0,4 mMol) des in Beispiel 1 verwendeten Polysulfons wurden in 100 ml Chlorbenzol gelöst und die Lösung auf 130°C erhitzt. Über einen Zeitraum von 4 h wurden 1,13 g (0,011 Mol) Maleinsäureanhydrid, dispergiert in 4 ml Chlorbenzol, also ohne Dicumylperoxid zugesetzt. Das Produkt wurde durch Fällung aus 500 ml Ethanol isoliert. Es wurde ein weißes Pulver erhalten.

### Beispiel 3

6 kg des Polysulfons aus Beispiel 1 und 53 g Maleinsäureanhydrid wurden bei einer Massetemperatur von 310°C auf einem Zweiwellenextruder, bei einem Durchsatz von 10 kg/h gemischt. Das Produkt wurde in THF gelöst und durch 3-maliges Umfällen aus THF-Lösung mit Ethanol gereinigt; schließlich wurde ein weißes Pulver erhalten.

### Beispiel 4

6 kg eines Polyarylethers aus 4,4'-Dihydrodiphenylsulfon und 4,4'-Dichlordiphenylsulfon (Polyethersulfon; VZ = 59 ml/g, gemessen in 1 %iger Lösung in einem 1:1-Gemisch aus Phenol und 1,2-Dichlorbenzol; z.B. Handelsprodukt Ultrason® E 2010 BASF) und 106 g Maleinsäureanhydrid wurden bei 340°C auf einem Zweiwellenextruder und einem Durchsatz von 10 kg/h gemischt. Das Produkt wurde durch zweimaliges Fällen aus N-Methylpyrrolidonlösung in Wasser gereinigt. Man erhielt ein gelbliches Produkt mit einer VZ von 57 ml/g, gemessen in 1 %iger Lösung in einem 1:1-Gemisch aus Phenol und 1,2-Dichlorbenzol und einem Gehalt an chemisch fixiertem Maleinsäureanhydrid von 0,23 Gew.-%.

### Anwendungstechnische Prüfungen

Die jeweils erhaltenen Produkte wurden durch Gelpermeationschromatographie (GPC) in 1 %iger Lösung auf Reste von Maleinsäureanhydrid untersucht; es wurde in keinem Fall freies MSA gefunden.

Die Klebefestigkeit der modifizierten Polyarylether wird in folgendem Test geprüft: 2 Metallplatten werden bei 300 bis 350°C mit der Formmasse verklebt (Kontaktfläche 2 x 2 cm); dazu werden jeweils 0,6 g Polymer-Pulver verwendet und die Platten mit stets gleichem Druck zusammengebracht. Die zum Trennen der Platten benötigte Spannung (Trennfestigkeit) wurde in einem Zugversuch bei einer Dehngeschwindigkeit von 0,1 cm/min bestimmt.

Die Ergebnisse der Charakterisierung sind in der nachstehenden Tabelle aufgeführt. Der Vergleichsversuch bezieht sich auf das unveränderte Polysulfon.

**Tabelle 1:**

| Formmassen als thermostatible Kleber | | | |
|---|---|---|---|
| Beispiel | M_{w} | Gew.-% MSA¹⁾ | Klebefestigkeit [N/cm²] |
| 1 | 42.000 | 0,4 | 4300 |
| 2 | 41.500 | 0,1 | 3690 |
| 3 | 38.000 | 0,2 | 3800 |
| 4 | 40.000 | 0,23 | 4200 |
| Vergleich 1 | 44.000 | 0 | 3080 |
| Vergleich 2 | 41.000 | 0 | 3210 |

| | | | |
|---|---|---|---|
| ¹⁾ chemisch gebundenes MSA | | | |

Die modifizierten Polyarylether wiesen gegenüber den nicht modifizierten stark erhöhte Klebefestigkeiten auf.

### Glasfaserverstärkte erfindungsgemäße Formmassen (Beispiele 5 bis 12)

### Komponente A₁

### Herstellung siehe Beispiel 3.

### Komponente A₂

### Herstellung siehe Beispiel 4

### Komponente B₁

Polyarylether aus Bisphenol A und 4,4'-Dichlordiphenylsulfon (Polysulfon; VZ = 64 ml/g, gemessen in 1 %iger Lösung in einem 1:1-Gemisch von Phenol und 1,2-Dichlorbenzol; z.B. Handelsprodukt Ultrason® S 2010, BASF).

### Komponente B₂

Polyarylether aus 4,4'-Dihydroxydiphenylsulfon und 4,4'-Dichlordiphenylsulfon (Polyethersulfon; VZ = 59 ml/g, gemessen in 1 %iger Lösung eines 1:1-Gemisches von Phenol und 1,2-Dichlorbenzol; z.B. Handelsprodukt Ultrason® E 2010, BASF).

### Komponente C

Glasfaserrovings einer Dicke von 10 µm aus E-Glas, die mit einer Schlichte aus Polyurethan ausgerüstet waren. Nach dem Einarbeiten lagen die mittleren Länaen der Glasfasern etwa zwischen 0,1 und 0,5 mm.

### Herstellung der glasfaserverstärkten Formmassen

Die Komponenten A, B und C wurden in einem Zweiwellenextruder bei einer Massetemperatur von 310 bis 340°C gemischt. Die Schmelze wurde durch ein Wasserbad geleitet und granuliert.

Das getrocknete Granulat wurde bei 310 bis 340°C zu Normkleinstäben (10 x 10 x 3 mm) und Schulterstäben verarbeitet.

Die Schlagzähigkeit wurde an Normkleinstäben nach DIN 53 453 bestimmt, E-Modul und Zugfestigkeit wurden im Zugversuch nach DIN 53 455 an Schulterstäben bestimmt.

Die Zusammensetzungen der Formmassen und die Ergebnisse der anwendungstechnischen Prüfungen sind Tabelle 2 zu entnehmen.

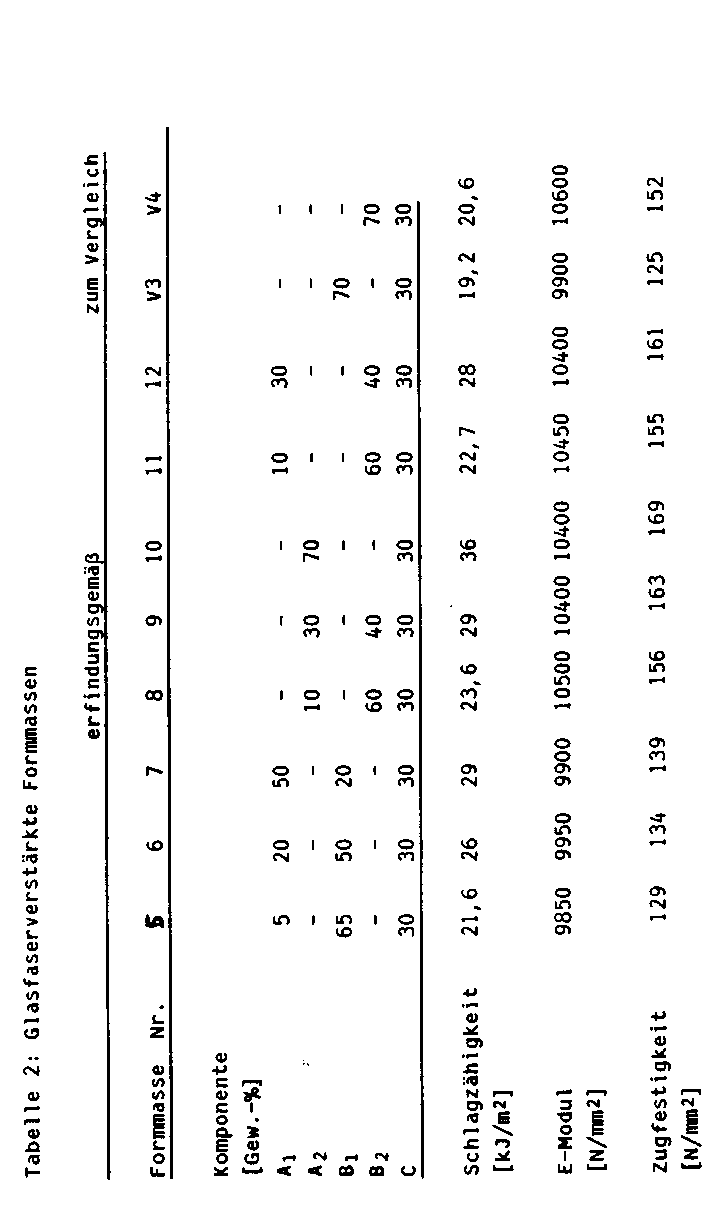

### Polyamide enthaltende erfindungsgemäße Formmassen (Beispiele 13-24)

### Komponente D₁

Polyhexamethylenadipinsäureamid mit einem K-Wert (nach Fikentscher) von 76, entsprechend einer relativen Viskositat ηᵣₑₗ von 2,95, gemessen 1 gew.-%ig in 96 %iger Schwefelsäure.

### Komponente D₂

Teilaromatisches Copolyamid, in üblicher Weise (vgl. EP-A-129 195) kondensiert aus 55 Gewichts-Teilen Terephthalsäure, 35 Teilen ε-Caprolactam und 38,5 Teilen Hexamethylendiamin, charakterisiert durch eine relative Viskosität von 2,4 (gemessen 1 gew.-%ig in 96 %iger Schwefelsäure).

### Komponente E

Ethylen-Propylen-Kautschuk, mit 0,7 Gew.-% Maleinsäure/Maleinsäureanhydrid modifiziert, gekennzeichnet durch einen MFI-Wert von 3 g pro 10 min (gemessen bei 2,16 kg/230°C).

### Herstellung der Formmassen

Die Bestandteile wurden in einem Zweiwellenextruder bei einer Massetemperatur von 310 bis 340°C gemischt. Die Schmelze wurde durch ein Wasserbad geleitet und granuliert.

Das getrocknete Granulat wurde bei 310 bis 330°C zu Rundscheiben (60 x 2 mm) und Normkleinstäben zur Ermittlung der Durchstoßarbeit nach DIN 53443 an Rundscheiben bzw. der Kerbschlagzähigkeit an Normkleinstäben nach DIN 53453 gespritzt.

Zusammensetzung der Formmassen und Ergebnisse der Messungen sind der Tabelle 3 und 4 zu entnehmen.

**Tabelle 3**

| Formmasse Nr. | V5∗) | 13 | V6∗) | 14 | 15 | 16 | V7∗) | 17 |
|---|---|---|---|---|---|---|---|---|
| Komponente [Gew.-%] | | | | | | | | |
| A | 0 | 30 | 0 | 33 | 50 | 66 | 0 | 30 |
| B₁ | 84 | 54 | 66 | 33 | 16 | - | 66 | 36 |
| D₁ | 16 | 16 | - | - | - | - | 28 | 28 |
| D₂ | - | - | 28 | 28 | 28 | 28 | - | - |
| E | - | - | 6 | 6 | 6 | 6 | 6 | 6 |
| Durchstoßarbeit [Nm] | 2 | 18 | 2,5 | 65,2 | 66,7 | 69 | 1,8 | 36 |
| Kerbschlagzähigkeit [KJ/m²] | 1,6 | 4 | 2,9 | 4,9 | 8,5 | 11,7 | 1,7 | 4,5 |

| | | | | | | | | |
|---|---|---|---|---|---|---|---|---|
| ∗) Vergleichsexperiment | | | | | | | | |

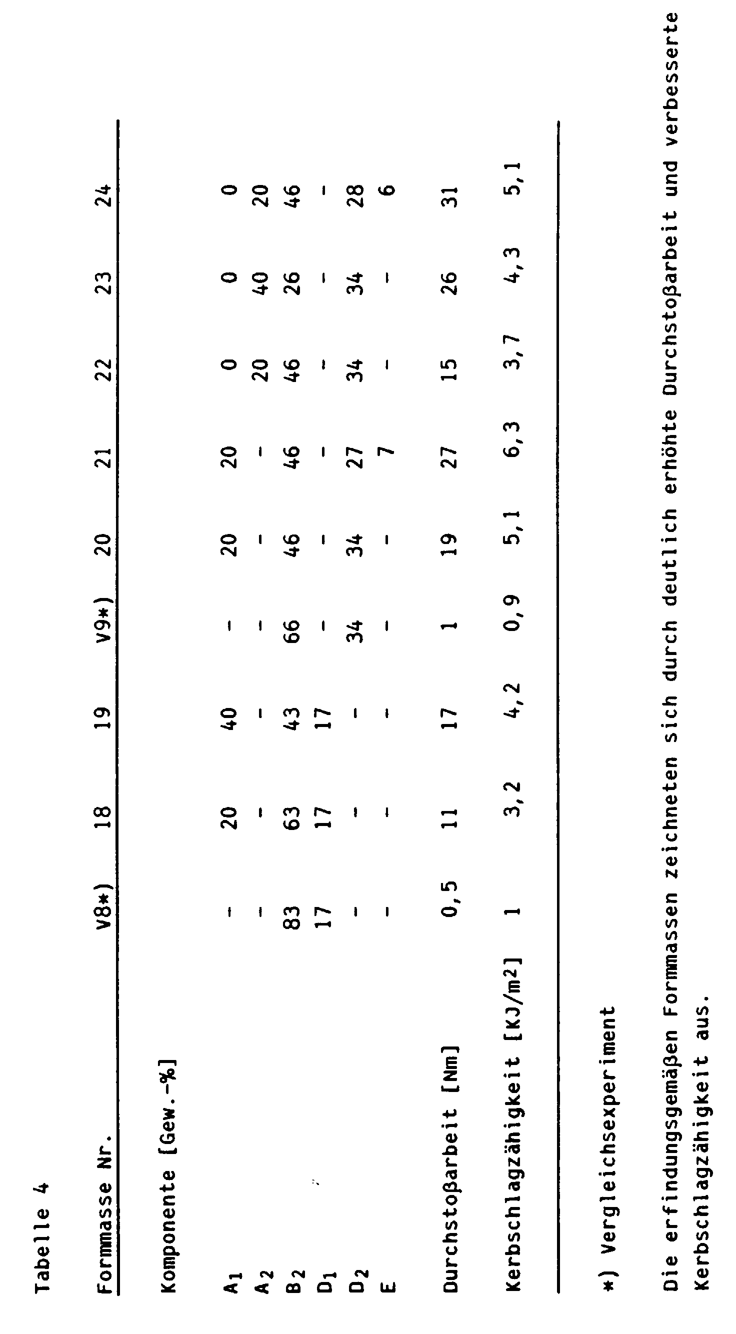

## Patentansprüche

1. Formmassen auf der Grundlage von Polyarylethern A, erhältlich durch Umsetzung von Polyarylethern I mit wiederholten Strukturelementen 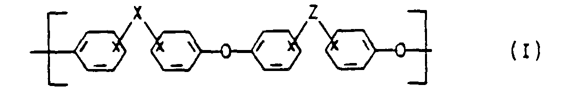 und Halogen- oder Methoxyendgruppen
oder deren kernsubstituierten C₁-C₆-Alkyl-, Alkoxy-, Aryl-, Chlor- oder Fluorderivaten, wobei
X und Z unabhängig voneinander
-SO₂-, -O- -S- , 〉C=0 ,
eine chemische Bindung oder -CRR'- bedeuten, R und R' jeweils Wasserstoffatome, C₁-C₆-Alkyl- oder Alkoxy-Gruppen, R' zusätzlich Arylgruppen oder deren Fluor- oder Chlorderivate darstellen, mit der Maßgabe, daß X und Z nicht gleichzeitig -O- bedeuten, mit einer reaktiven Verbindung, die neben einer C,C-Doppel- oder Dreifachbindung eine bzw. mehrere Carbonyl-, Carbonsäure-, Carboxylat-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen enthält.

2. Formmassen nach Anspruch 1, enthaltend Polyarylether A, erhältlich durch Umsetzung von
a) 80 bis 99,9 Gew.-% des Polyarylethers I
mit
b) 0,1 bis 20 Gew.-% der reaktiven Verbindung, ausgewählt aus der Gruppe gebildet aus
einer α,β-ungesättigten Dicarbonylverbindung,
einer α,β-ungesättigten Carbonylverbindung,
eines Amid-Gruppen enthaltenden Monomeren mit einer polymerisierbaren Doppelbindung und
eines Lactam-Gruppen enthaltenden Monomeren mit einer polymerisierbaren Doppelbindung
in Gegenwart von 0 bis 1 Gew.-% eines Radikalstarters.

3. Formmassen nach Anspruch 1 oder 2, enthaltend mit Maleinsäureanhydrid gepfropfte Polyarylethersulfone I.

4. Formmassen nach einem der Ansprüche 1 bis 3, enthaltend mit 0,1 bis 1,5 Gew.-% Maleinsäureanhydrid gepfropfte Polyarylethersulfone I, enthaltend
5 bis 95 Mol-% wiederkehrende Einheiten II 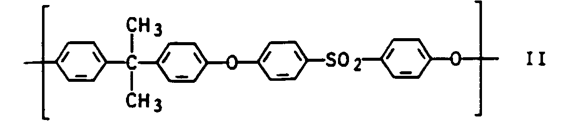 5 bis 95 Mol-% wiederkehrende Einheiten III

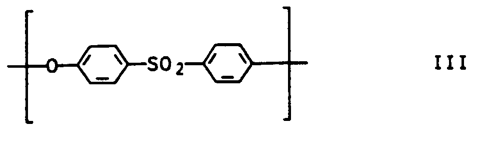

5. Formmassen nach Anspruch 1, enthaltend Block- oder Pfropfcopolymere aus Polyarylethersegmenten mit wiederholten Strukturelementen I sowie Segmenten aus der Gruppe der Polyamide, Polyester, aromatischen Polycarbonate und Polyestercarbonate, Polysiloxane, Polyimide und Polyetherimide, wobei die Polyarylethersegmente mit der reaktiven Verbindung modifiziert sind und der Gewichtsanteil der Polyarylethersegmente 20 bis 80 % beträgt.

6. Formmassen nach einem der Ansprüche 1 bis 4, enthaltend, bezogen auf die Summe der Komponenten A bis C,
A) 5 bis 95 Gew.-% Polyarylether A,
B) 0 bis 90 Gew.-% Polyarylether I und
C) 5 bis 45 Gew.-% faser- oder teilchenförmige Verstärkungs- oder Füllstoffe oder deren Mischungen

7. Formmassen nach einem der Ansprüche 1 bis 4, enthaltend, bezogen auf die Summe der Komponenten A bis E,
A) 1 bis 99 Gew.-% Polyarylether A,
B) 0 bis 90 Gew.-% Polyarylether I,
C) 0 bis 45 Gew.-% faser- oder teilchenförmige Verstärkungs- oder Füllstoffe oder deren Mischungen,
D) 1 bis 99 Gew.-% thermoplastische Polyamide D und
E) 0 bis 25 Gew.-% schlagzähmodifizierende Kautschuke E.

8. Formmassen nach Anspruch 7, enthaltend teilaromatische Polyamide B aus, bezogen auf das Polyamid B
40 - 90 Gew.-% Einheiten, die sich von Terephthalsäure und Hexamethylendiamin ableiten,
0 - 50 Gew.-% Einheiten, die sich von ε-Caprolactam ableiten und/oder
0 - 60 Gew.-% Einheiten, die sich von Adipinsäure und Hexamethylendiamin ableiten.

9. Verwendung der Formmassen nach einem der Ansprüche 1 - 5 als thermostabiler Kleber.

10. Verwendung der Formmassen nach einem der Ansprüche 1 bis 8 als thermoplastische Formmassen zur Herstellung von Formteilen, Fasern und Filmen.

## Claims

1. A molding composition based on a polyaryl ether A, obtainable by reacting polyaryl ethers I with repeating structural elements 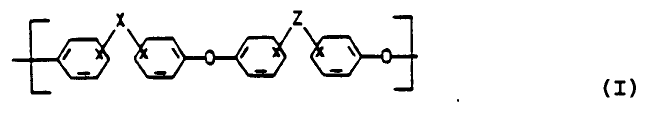 and halogen or methoxy end groups or nuclear-substituted C₁-C₆-alkyl, alkoxy, aryl, chlorine or fluorine derivatives thereof, where
X and Z, independently of one another, are each -SO₂-, -O-, -S-, 〉C=0,
a chemical bond or -CRR'-, R and R' are each hydrogen, C₁-C₆-alkyl or alkoxy, R' is also aryl or fluorine or chlorine derivatives thereof, with the proviso that X and Z are not both -O-, with a reactive compound which, besides a C-C double or triple bond, contains one or more carbonyl, carboxylic acid, carboxylate, acid anhydride, amide, imide, carboxylic ester, amino, hydroxyl, epoxy, oxazoline, urethane, urea, lactam or halobenzyl groups.

2. A molding composition as claimed in claim 1, containing a polyaryl ether A obtainable by reacting
a) from 80 to 99.9% by weight of the polyaryl ether I with
b) from 0.1 to 20% by weight of the reactive compound selected from the group comprising
an α,β-unsaturated dicarbonyl compound,
an α,β-unsaturated carbonyl compound,
an amide monomer with a polymerizable double bond and
a lactam monomer with a polymerizable double bond in the presence of from 0 to 1% by weight of a radical initiator.

3. A molding composition as claimed in claim 1 or 2, containing polyaryl ether sulfones I grafted with maleic anhydride.

4. A molding composition as claimed in any of claims 1 to 3, containing polyaryl ether sulfones I which are grafted with from 0.1 to 1.5% by weight of maleic anhydride and contain from 5 to 95 mol% of repeating units II 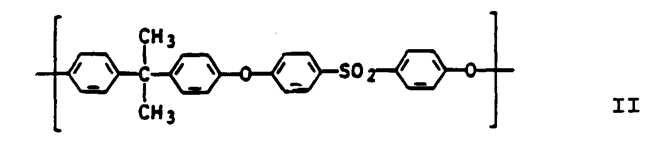 and from 5 to 95 mol% of repeating units III

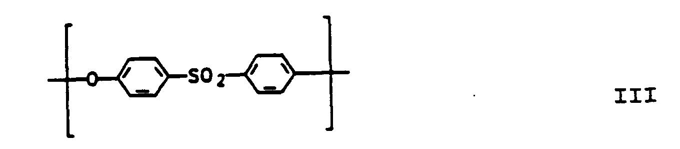

5. A molding composition as claimed in claim 1, containing block or graft copolymers composed of polyaryl ether segments with repeating structural elements I and segments from the group comprising polyamides, polyesters, aromatic polycarbonates and polyester carbonates, polysiloxanes, polyimides and polyether imides, where the polyaryl ether segments are modified with the reactive compound, and the content of polyaryl ether segments is from 20 to 80% by weight.

6. A molding composition as claimed in any of claims 1 to 4, containing, based on the total of components A to C,
A) from 5 to 95% by weight of polyaryl ether A,
B) from 0 to 90% by weight of polyaryl ether I and
C) from 5 to 45% by weight of fibrous or particulate reinforcing agents or fillers or mixtures thereof.

7. A molding composition as claimed in any of claims 1 to 4, containing, based on the total of components A to E,
A) from 1 to 99% by weight of polyaryl ether A,
B) from 0 to 90% by weight of polyaryl ether I,
C) from 0 to 45% by weight of fibrous or particulate reinforcing agents or fillers or mixtures thereof,
D) from 1 to 99% by weight of thermoplastic polyamides D and
E) from 0 to 25% by weight of impact modifying rubbers E.

8. A molding composition as claimed in claim 7, containing partially aromatic polyamides B composed of, based on the polyamide B,
40 - 90% by weight of units derived from terephthalic acid and hexamethylenediamine,
0 - 50% by weight of units derived from ε-caprolactam and/or
0 - 60% by weight of units derived from adipic acid and hexamethylenediamine.

9. The use of the molding compositions as claimed in any of claims 1 - 5 as thermally stable adhesives.

10. The use of the molding compositions as claimed in any of claims 1 to 8 as thermoplastic molding compositions for producing moldings, fibers and films.

## Revendications

1. Masses à mouler à base de poly(aryléthers) A obtenus par réaction de poly(aryléthers) I comportant des éléments structuraux répétitifs 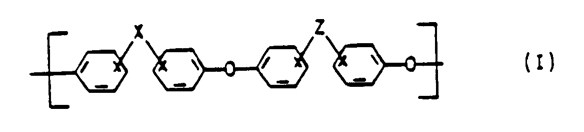 et des groupements terminaux halogéno ou méthoxy, ou de dérivés de ceux-ci substitués sur le noyau par des restes alkyle en C₁-C₆, alcoxy, aryle ou par des atomes de chlore ou de fluor,
X et Z représentant chacun, indépendamment l'un de l'autre, -SO₂-, -O-, -S-, 〉C=0,
une liaison chimique ou -CRR'-, R et R' étant mis chacun pour un atome d'hydrogène ou un groupement alkyle en C₁-C₆ ou alcoxy, R' pouvant être en outre un groupement aryle ou un dérivé fluoré ou chloré de celui-ci, étant spécifié que X et Z ne représentent pas simultanément -O- , avec un composé réactif qui contient, en plus d'une liaison C-C double ou triple, un ou plusieurs groupements carbonyle, acide carboxylique, carboxylate, anhydride d'acide, amide d'acide, imide d'acide, ester d'acide carboxylique, amino, hydroxyle, époxy, oxazoline, uréthanne, urée, lactame ou halogénobenzyle.

2. Masses à mouler selon la revendication 1, contenant des poly(aryléthere) A obtenus par réaction de
a) 80 à 99,9% en poids du poly(aryléther) I avec
b) 0,1 à 20% en poids du composé réactif choisi dans le groupe constitué par
un composé dicarbonylé α,β-insaturé,
un composé carbonylé α,β-insaturé,
un monomère comportant une double liaison polymérisable et contenant des groupements amide et
un monomère comportant une double liaison polymérisable et contenant des groupements lactame,
en présence de 0 à 1°% en poids d'un amorceur radicalaire.

3. Masses à mouler selon la revendication 1 ou 2, contenant des poly(aryléthersulfonee) I greffées avec de l'anhydride maléique.

4. Masses à mouler selon l'une quelconque des revendications 1 à 3, contenant des poly(aryléthersulfones) I greffées avec 0,1 à 1,5% en poids d'anhydride maléique qui contiennent
5 à 95% en moles de motifs répétitifs II 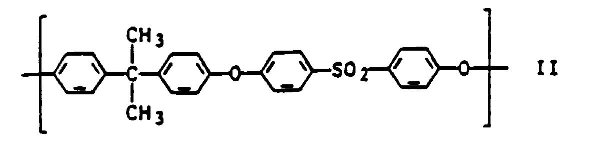 5 à 95% en moles de motifs répétitifs III

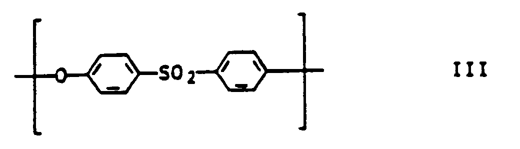

5. Masses à mouler selon la revendication 1, contenant des copolymères séquencés ou greffés qui comprennent des segments poly(aryléther) comportant des éléments structuraux I répétitifs, ainsi que des segments du groupe des polyamides, des polyesters, des polycarbonates aromatiques et des polyestercarbonates, des polysiloxanes, des polyimides et des poly(étherimides), les segments poly(aryléther) étant modifiés par le composé réactif et la part en poids des segments poly(aryléther) s'élevant à 20-80%.

6. Masses à mouler selon l'une quelconque des revendications 1 à 4, contenant, par rapport à la somme des composants A à C,
A) 5 à 95% en poids de poly(aryléther) A,
B) 0 à 90% en poids de poly(aryléther) I et
C) 5 à 45% en poids de substances fibreuses ou particulaires de renforcement ou de charge ou de mélanges de celles-ci.

7. Masses à mouler selon l'une quelconque des revendications 1 à 4, contenant, par rapport à la somme des composants A à E,
A) 1 à 99% en poids de poly(aryléther) A,
B) 0 à 90% en poids de poly(aryléther) I,
C) 0 à 45% en poids de substances fibreuses ou particulaires de renforcement ou de charge ou de mélanges de celles-ci,
D) 1 à 99% en poids de polyamides thermoplastiques D et
E) 0 à 25% en poids de caoutchoucs E modifiant la résilience.

8. Masses à mouler selon la revendication 7, contenant des polyamides partiellement aromatiques B se composant, par rapport au polyamide B, de
40 à 90% en poids de motifs qui dérivent d'acide téréphtalique et d'hexaméthylènediamine,
0 à 50% en poids de motifs qui dérivent d'ε-caprolactame et/ou
0 à 60% en poids de motifs qui dérivent d'acide adipique et d'hexaméthylènediamine.

9. Utilisation des masses à mouler selon l'une quelconque des revendications 1 à 5 comme colles thermostables.

10. Utilisation des masses à mouler selon l'une quelconque des revendications 1 à 8 comme masses à mouler thermoplastiques pour la fabrication de pièces moulées, de fibres et de films.
